Europäisches Patentamt

European Patent Office

Office européen des brevets

(19)

(11) Veröffentlichungsnummer: **0 133 257**
A1

(12) **EUROPÄISCHE PATENTANMELDUNG**

(21) Anmeldenummer: 84108596.2

(22) Anmeldetag: 20.07.84

(51) Int. Cl.⁴: **F 16 L 31/00**, B 65 G 53/56

(30) Priorität: 26.07.83 DE 3326798

(43) Veröffentlichungstag der Anmeldung: 20.02.85 Patentblatt 85/8

(84) Benannte Vertragsstaaten: BE CH DE FR GB LI NL SE

(71) Anmelder: Silo Verfahrens AG, Hofstrasse 1, CH-6301 Zug (CH)

(72) Erfinder: König, Gustav, Stadtwaldstrasse 69, D-8052 Moosburg (DE)

(74) Vertreter: Jackisch, Walter, Dipl.-Ing. et al, Menzelstrasse 40, D-7000 Stuttgart 1 (DE)

(54) Fördereinrichtung.

(57) Die Fördereinrichtung weist eine Weiche (2) mit einem angeschlossenen flexiblen Förderschlauch (3, 3') auf und ist zur Beförderung körniger, flüssiger oder gasförmiger Medien vorgesehen. Der Förderschlauch (3, 3') weist hiebei an mindestens einem Ende einen Dichtungsflansch (14, 14') auf, der eine Dichtfläche (16) besitzt und aus dem gleichen Werkstoff wie der Förderschlauch (3, 3') gefertigt und mit der Wandung des Förderschlauches (3, 3') materialeinheitlich einstückig ausgeführt ist.

EP 0 133 257 A1

0133257

Patan...
Dipl.-Ing. ...
7 Stuttgart N, ...straße 40

Silo Verfahrens AG

Hofstraße 1

CH-6300 Zug

A 1-86 397/soa
18.07.1984

· | ·

## Fördereinrichtung

==================

Die Erfindung betrifft eine Fördereinrichtung mit
den Merkmalen des Oberbegriffs des Anspruchs 1.

Bei Fördereinrichtungen dieser Art wird bemängelt,
daß zum Anschließen des Förderschlauches ein zusätzliches Dichtungselement vorzusehen ist, so daß
verschiedene Teile am Lager bereit gehalten werden
müssen und die Montage aufwendig ist. Ein weiterer
Nachteil besteht darin, daß für die Anbringung des
Förderschlauches an einem Rohrstutzen oder dergleichen
zusetzliche Bandschellen oder ähnliche Befestigungsmittel zu verwenden sind.

Die Aufgabe der Erfindung besteht darin, eine Fördereinrichtung mit den Merkmalen des Oberbegriffs so
zu verbessern, daß mit einfachen Mitteln ein loses
Dichtungselement eingespart und eine kostengünstige
Herstellung und leichte Montage des Förderschlauches
erzielt wird.

Diese Aufgabe wird erfindungsgemäß durch die kennzeichnenden Merkmale des Anspruchs 1 gelöst.

Bevorzugte Ausgestaltungen und Weiterbildungen sowie weitere Vorteile und wesentliche Einzelheiten der Erfindung sind den Merkmalen der Unteransprüche, der nachfolgenden Beschreibung und der Zeichnung zu entnehmen, die in schematischer Darstellung bevorzugte Ausführungsformen als Beispiel zeigt. Es stellen dar:

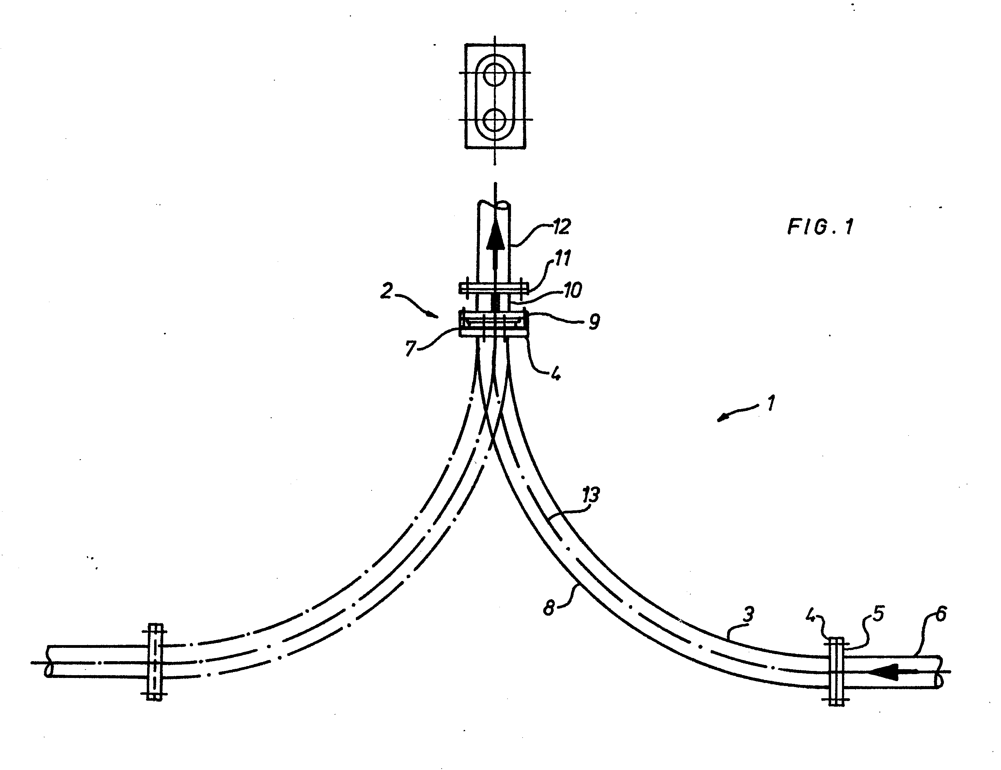

FIG. 1 eine Draufsicht auf eine erfindungsgemäße Fördereinrichtung,

FIG. 2 eine Seitenansicht eines erfindungsgemäßen Förderschlauches der Fördereinrichtung gemäß FIG. 1,

FIG. 3 eine Teilansicht eines Endbereichs des Förderschlauches der FIG. 1 in einer vergrößerten Darstellung und

FIG. 4 eine geschnittene Ansicht eines erfindungsgemäßen Förderschlauches der Fördereinrichtung gemäß FIG. 1 mit einem die Schlauchwandung verstärkenden Schraubenfederelement.

Die in der Zeichnung dargestellte Fördereinrichtung 1 ist beim vorliegenden Ausführungsbeispiel für den Transport eines vorzugsweise feinkörnigen Schüttgutes vorgesehen und weist eine Weiche 2 auf, der ein flexibler Förderschlauch 3 zugehörig ist.

Der Förderschlauch 3 weist an beiden Enden je einen Befestigungsflansch 4 auf. Der eine Befestigungsflansch 4 ist mit einem Gegenflansch 5 eines stationären Rohrteils 6 lösbar verbunden. Der Rohrteil 6 ist rechtwinklig zur Weiche 2 angeordnet, so daß der Förderschlauch 3, der mit seinem anderen Befestigungsflansch 4 an einem verschiebbaren Stellteil 7
der Weiche 2 festgelegt ist, einen Rohrbogen 8 bildet.
Die strichpunktierte Darstellung des in entgegengesetzter Richtung verlaufenden Schlauch-Rohrbogens ist
eine Variante, die verdeutlicht, daß der Förderschlauch
3 eine große Flexibilität besitzt und praktisch je
nach Erfordernis in den verschiedensten Bogenausbildungen installiert werden kann. Dabei ist es ohne
weiteres möglich, den Förderschlauch 3 nicht nur in
einem $90^{o}$-Bogen anzuordnen, sondern zum Beispiel auch
als $180^{o}$-Umkehrbogen auszuführen, je nach dem, in
welcher Richtung der Rohrteil 6 der Weiche 2 der Fördereinrichtung 1 zugeordnet ist.

Der Stellteil 7 ist an einem Grundkörper 9 der Weiche
2 verschiebbar geführt, und zwar so, daß die Verschiebung des Stellteils 7 in Richtung quer zur Zeichnungsebene erfolgt. Am Grundkörper 9 sind zwei Anschlußrohre 10 vorgesehen, die quer zur Zeichnungsebene hintereinander angeordnet
sind und einen gemeinsamen Anschlußflansch 14 aufweisen, an dem
zwei quer zur Zeichnungsebene hintereinander angeordnete Rohrabgänge 12 lösbar befestigt sind. Es können aber auch mehr als zwei
Anschlußrohre vorgesehen sein.

Zur Abdichtung des Schiebebereichs zwischen dem Grundkörper 9 und dem Stellteil 7 sind nicht sichtbare Dichtringe vorgesehen, die in Ringnuten des Grundkörpers 9
gelagert sind und die Durchgangsöffungen in der Weiche
2 im Schiebeflächenbereich umgeben. Diese Dichtringe
sind insbesondere so ausgebildet, daß sie eine der
Überdruckseite zugewandte Umfangsnut und eine in Richtung gegen die Schiebedichtfläche des Stellteils 7
wirkende Dichtlippe aufweisen, so daß bei normalem
Umgebungsdruck die Dichtlippe unter elastischer Materialvorspannung an der Schiebedichtfläche dichtend
anliegt und bei zunehmendem Überdruck durch die Druckübermittlung im Bereich der Umfangsnut des Dichtrings
eine verstärkte Anpressung der Dichtlippe gegen die
Schiebedichtfläche des Stellteils 7 erfolgt.

Sowohl der Förderschlauch 3 als auch die Dichtringe
der Weiche 2 bestehen aus Polyurethanwerkstoff und
sind vorzugsweise im Formgießverfahren hergestellt.
Der Förderschlauch 3 ist hinsichtlich seiner Flexibilität so ausgeführt, daß er bezüglich seiner Längsachse 13 längbar, stauchbar, biegbar sowie torsionselastisch und quer zur Biegung schwenkbar ist. Zudem ist
der Förderschlauch 3 antistatisch ausgebildet, so
daß bei der Förderung des Mediums keine elektrostatische
Aufladung auftreten kann.

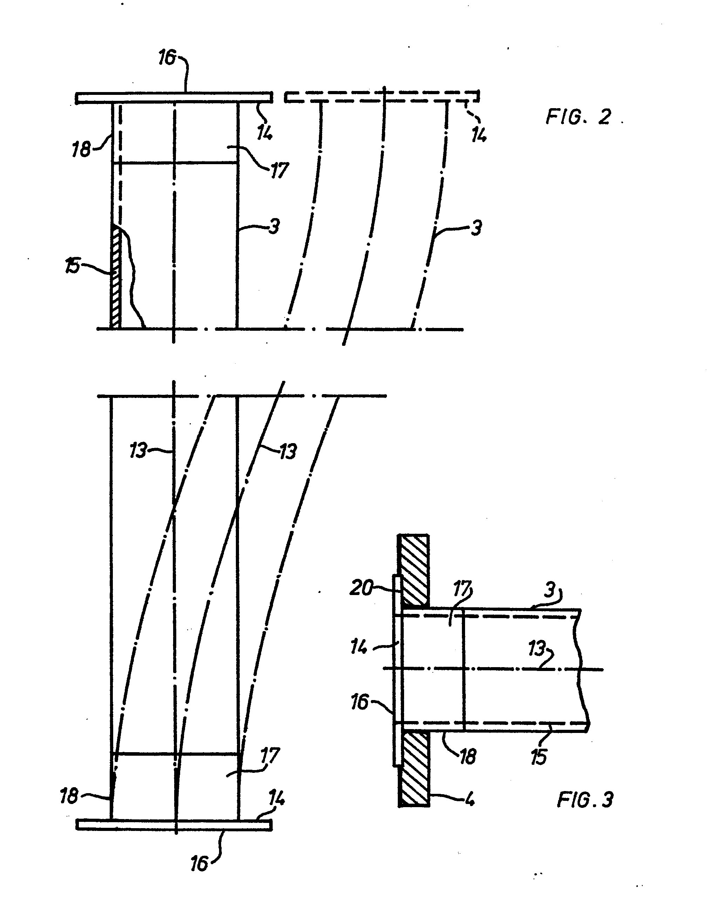

Die FIG. 2 bis 4 zeigen, daß der Förderschlauch 3,3'
an beiden Enden je einen Dichtungsflansch 14,14' aufweist. Die Dichtungsflansche 14,14' sind materialeinheitlich einstückig mit der Wandung 15,15' des Förderschlauches 3,3' ausgebildet. Das heißt, daß die Dichtungsflansche 14,14' aus ein und demselben Polyurethanwerkstoff wie auch der Förderschlauch 3,3' bestehen.
Die Dichtungsflansche 14,14' besitzen eine Dichtfläche
16, die unmittelbar direkt gegen die entsprechende
Gegenfläche der Weiche 2 beziehungsweise des Rohrteils
6 gedrückt wird. Die materialeinheitlich angeformten
Dichtungsflansche 14 beziehungsweise 14' an beiden
Enden des Förderschlauches 3 beziehungsweise 3' sind
vorzugsweise übereinstimmend gleich ausgebildet und
weisen denselben Durchmesser und dieselbe Wandstärke auf.

Es ist zu erkennen, daß die Wandung 15,15' des Förderschlauches 3,3' an den Endbereichen eine größere
Wandstärke aufweist als im übrigen Längenbereich
des Förderschlauches 3,3', so daß durch die Wandstärkenverdickung Versteifungsteile 17 gebildet sind.
Die Länge des Versteifungsteils 17 ist zweckmäßig so,
daß sie mindestens einem Drittel des Innendurchmessers
des Schlauches 3,3' entspricht. Bevorzugt entspricht
die Länge des Versteifungsteils 17 etwa dem halben Innendurchmesser
des Förderschlauches 3, 3'. Der Versteifungsteil 17 selbst ist
konisch gestaltet, wobei die Wandstärke in Richtung zum Dichtungsflansch 14, 14' zunimmt und am Außenumfang eine Schrägfläche
18 aufweist. Infolge dieser Ausbildung kann der Schlauch eine
ideale S-Form einnehmen.

In der FIG. 2 ist gemäß der strichpunktierten Darstellung eine gebogene Position des Förderschlauches
3 entsprechend einer Verstellung der Weiche 2 gezeigt. Der FIG. 3 ist zu entnehmen, daß der materialeinheitlich am Förderschlauch 3 angeformte Dichtungsflansch 14 von dem Befestigungsflansch 4 übergriffen
ist. Dieser Befestigungsflansch 4 ist als kreisförmig geschlossener Ring ausgeführt und weist eine
Ausnehmung 20 auf, in der der Dichtungsflansch 14
etwa mit seiner halben Wandstärke formschlüssig gelagert ist, so daß eine einwandfreie Zentrierung
gegeben ist, wobei die Dichtfläche 16 etwas vor der
Ebene des Befestigungsflansches 4 sich befindet. Der
Dichtungsflansch 14 ist so flexibel, daß er mit der
Wandung 15 des Förderschlauches 3 so weit zusammengedrückt werden kann, daß der Befestigungsflansch 4
nachträglich von außen über den Dichtungsflansch 14
auf den Förderschlauch 3 aufgesetzt beziehungsweise
montiert werden kann.

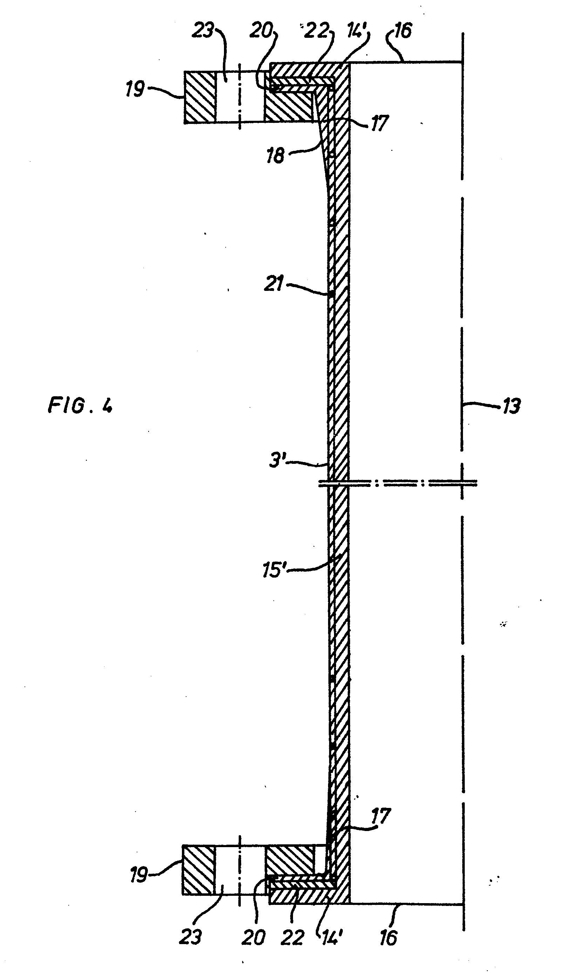

Die Wandung 15' des in der FIG. 4 dargestellten Förderschlauches 3' weist ein Schraubenfederelement 21 auf, das innerhalb der Wandung 15' eingebettet ist und aus einem Federstahldraht besteht. Durch dieses Schraubenfederelement 21 wird eine Festigkeitserhöhung erreicht, so daß dieser Förderschlauch 3' unter Aufrechterhaltung der vorbeschriebenen Eigenschaften auch für höhere Betriebsdrücke einsetzbar ist.

In den Dichtungsflanschen 14' befinden sich Stützscheiben 22, an denen die Enden des Schraubenfederelementes 21 angeschweißt sind und die dem Dichtungsflansch 14' eine hohe Eigensteifigkeit geben. Auch hier sind beiden Endbereichen des Förderschlauches 3' Befestigungsflansche 19 zugeordnet, die den jeweiligen Dichtungsflansch 14' übergreifen, der mit der Stützscheibe 22 im Bereich der Ausnehmung 20 sich befindet und nur mit dem die Dichtfläche 16 aufweisenden vorderen Teil der Wandstärke die Anschlußebene des Befestigungsflansches 19 überragt. Der Befestigungsflansch 19 ist hier als zweigeteilter Ring ausgebildet. Die beiden Ringteile des Befestigungsflansches 19 werden bei der Montage radial, also quer zur Längsachse 13 an den Förderschlauch 3' angesetzt. Parallel zur Längsachse des Förderschlauches 3' besitzen die Befestigungsflansche 19 Löcher 23 zum Durchstecken von Befestigungsschrauben.

Der erfindungsgemäße Förderschlauch 3,3' kann praktisch in alle Richtungen und in verschiedene Winkelstellungen gedreht werden. Durch die einstückige Anformung des Dichtungsflansches 14,14' ist eine für die Herstellung, die Lagerhaltung und die Montage günstige Ausführung gegeben. Der erfindungsgemäße Förderschlauch 3,3' ist somit ein integrierter, wesentlicher Teil der Weiche 2, wobei der Förderschlauch 3,3' gleich mehrere Funktionen erfüllt, nämlich als flexibles
Weichen-Rohrförderteil, als Befestigungselement, als
Dichtungselement sowie zur Richtungsumleitung, so erfüllt
daß eine mehrfunktionale Kompaktbaueinheit gegeben
ist, die durch den verwendeten Polyurethanwerkstoff
eine hohe Verschleißfestigkeit und somit eine
lange Lebensdauer besitzt.

Der erfindungsgemäße Förderschlauch 3, 3' besitzt
eine hohe Bruchdehnung und ist beständig gegen verdünnte Säuren und Laugen sowie gegen hohe und tiefe
Temperaturen.

Patentanwalt
Dipl.-Ing. Walter Jackisch
7 Stuttgart N, Menzelstraße 40
0133257

Silo Verfahrens AG
Hofstraße 1

CH-6301 Zug

A 1-86 395/soa
18.07.1984


A N S P R Ü C H E

1. Fördereinrichtung mit einer Weiche für ein körniges,
flüssiges oder gasförmiges Medium und einem angeschlossenen flexiblen Förderschlauch,
dadurch gekennzeichnet, daß der Förderschlauch  (3,3')
an mindestens einem Ende aus gleichem Werkstoff einen
Dichtungsflansch (14,14') aufweist, der mit der Wandung (15,15') des Förderschlauches (3,3') ein einstückiges homogenes Teil bildet und eine Dichtfläche
(16) aufweist.


2. Fördereinrichtung nach Anspruch 1,
dadurch gekennzeichnet, daß die Flexibilität des Förderschlauches (3,3') durch eine bestimmte Werkstoffzusammensetzung so getroffen ist, daß der Förderschlauch (3,3')
bezüglich seiner Längsachse (13) längbar, stauchbar,
biegbar, torsionselastisch und quer zur Ebene der Biegung schwenkbar ist.


3. Fördereinrichtung nach einem der Ansprüche 1 oder 2,
dadurch gekennzeichnet, daß der Förderschlauch (3) in
Form eines Rohrbogens (8) mit dem einen Dichtungsflansch
(14) an einem stationären Rohrteil (6) und mit dem anderen Dichtungsflansch (14) an einem quer zur Längsachse
(13) des Förderschlauches  (3) verschiebbaren Stellteil (7)
der Weiche (2) angeordnet ist, wobei vorzugsweise der
Förderschlauch (3) über den verschiebbaren Stellteil (7)
der Weiche (2) quer zur Ebene des Rohrbogens (8) bewegbar angeordnet ist.


4. Fördereinrichtung nach einem der Ansprüche 1 bis 3, dadurch gekennzeichnet, daß die Wandung (15,15') des Förderschlauches (3,3') an dem sich an den Dichtungsflansch (14,14') anschließenden Endbereich als Versteifungsteil (17) ausgebildet ist, dessen Wandstärke größer ist als die Stärke der Wandung (15,15') im übrigen Längenbereich des Förderschlauches (3,3'), wobei vorzugsweise der Versteifungsteil (17) des Förderschlauches (3,3') mit einer äußeren Schrägfläche (18) und mit in Richtung zum Dichtungsflansch (14,14') zunehmender Wandstärke konisch ausgebildet ist.

5. Fördereinrichtung nach Anspruch 4,
dadurch gekennzeichnet, daß die Länge des Versteifungsteiles (17) bis zum Dichtungsflansch (14,14') mindestens einem Drittel, vorzugsweise dem halben Innendurchmesser des Förderschlauches (3,3') entspricht.

6. Fördereinrichtung nach einem der Ansprüche 1 bis 5,
dadurch gekennzeichnet, daß die Wandung (15') des Förderschlauches (3') zur Verstärkung ein Schraubenfederelement (21) aufweist, das vorzugsweise innerhalb der Wandung (15') des Förderschlauches (3') eingebettet angeordnet ist.

7. Fördereinrichtung nach Anspruch 6,
dadurch gekennzeichnet, daß in der Ebene des Dichtungsflansches (14') eine Stützscheibe (22) angeordnet ist, an der das Ende des Schraubenfederelementes (21) befestigt ist, wobei vorzugsweise die Stützscheibe (22) innerhalb der Dicke des Dichtungsflansches (14') in diesem eingebettet gelagert ist.

8. Fördereinrichtung nach einem der Ansprüche 1 bis 7,
dadurch gekennzeichnet, daß dem materialeinheitlich angeformten Dichtungsflansch (14,14') des Förderschlauches (3,3') ein Befestigungsflansch (4,19) zugeordnet ist, wobei vorzugsweise der Dichtungsflansch (14,14') des Förderschlauches (3,3') mit einem Teil seiner Wandungsstärke in einer Ausnehmung (20) des Befestigungsflansches (4,19) an-

0133257

geordnet ist.

9. Fördereinrichtung nach einem der Ansprüche 1 bis 8,
dadurch gekennzeichnet, daß der angeformte Dichtungsflansch (14) derart flexibel ausgeführt ist, daß der
Befestigungsflansch (4) als kreisförmig geschlossener
Ring über den entsprechend zusammendrückbaren Dichtungsflansch (14) auf den Förderschlauch (3) aufstülpbar ist.

10. Fördereinrichtung nach einem der Ansprüche 1 bis 9,
dadurch gekennzeichnet, daß der Befestigungsflansch (19)
als geteilter Ring ausgebildet ist und den Dichtungsflansch (14') des Förderschlauches (3') so weit übergreift, daß die Stützscheibe (22) des Schraubenfederelementes (21) im Bereich der Ausnehmung (20) gelagert ist.

Silo Verfahrens AG
Hofstraße
CH-6301 Zug

A 1-86 397/so
18.07.1984

0133257

1/3

FIG. 1

Silo Verfahrens AG
Hofstraße
CH-6301 Zug

2/3

A 1-86 397/so
18.07.1984

0133257

FIG. 2

FIG. 3

Silo Verfahrens AG
Hofstraße
CH-6301 Zug

A 1-86 1397796
18.07.1984

0133257

**FIG. 4**

## EINSCHLÄGIGE DOKUMENTE

EP 84108596.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A1 - 2 649 261 (HANSENS GUMMI- UND PACKUNGS-WERKE KG) <br> * Fig. 1 * <br> -- | 1,2 | F 16 L 31/00 <br> B 65 G 53/56 |
| A | GB - A - 1 382 347 (SOCIETE ANONYME DES ETABLISSEMENTS NEU) <br> * Fig. 3 * <br> -- | 1,2 | |
| A | DD - A - 52 306 (DIETER PAUL) <br> * Fig. 1,2 * <br> -- | | |
| A | DE - A - 2 303 777 (TONNE) <br> * Fig. 1,2,6 * <br> ---- | | |

RECHERCHIERTE SACHGEBIETE (Int. Cl.4)

F 16 L

B 65 G

Der vorliegende Recherchenbericht wurde für alle Patentansprüche erstellt.

| Recherchenort | Abschlußdatum der Recherche | Prüfer |
|---|---|---|
| WIEN | 05-11-1984 | SCHUGANICH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82